# EUROPÄISCHE PATENTSCHRIFT

(11) **EP 2 746 363 B1**
(45) Veröffentlichungstag und Bekanntmachung des Hinweises auf die Patenterteilung: **02.09.2015**
(21) Anmeldenummer: 13005912.4
(22) Anmeldetag: 18.12.2013
(51) Int. Cl.: C09K 17/06, E02B 3/04, E02D 17/20

(54) **VERFAHREN ZUR VERFESTIGUNG SANDIGER KÜSTEN**
METHOD FOR SOLIDIFYING SANDY COASTS
PROCÉDÉ DE RENFORCEMENT DE CÔTES SABLEUSES

(30) Priorität: 21.12.2012 IT BZ20120043
(43) Veröffentlichungstag der Anmeldung: 25.06.2014
(73) Patentinhaber: Bridi, Ilario, 38123 Trento Fraz. Mattarello (IT)
(72) Erfinder: Bridi, Ilario, 38123 Trento Fraz. Mattarello (IT)
(74) Vertreter: Oberosler, Ludwig

(56) Entgegenhaltungen:
- DE-A1- 19 510 702
- GB-A- 1 294 875
- US-A1- 2002 117 302
- US-B1- 6 372 694
- DATABASE WPI Week 199316 Thomson Scientific, London, GB; AN 1993-131460 XP002722177, -& JP H05 70776 A (NIPPON CHEM IND CO LTD) 23. März 1993 (1993-03-23)

## Beschreibung

Es sind Konsolidierungsbauten, bzw. Anlandungsbauten, an Küstengebieten welcher der Erosion ausgesetzt sind bekannt, diese bestehen wesentlich aus überfluteten oder aus dem Wasser ragenden Steinschüttungen welche wesentlich parallel zum Strand (beabstandete Längsbefestigungen) verlaufen und/oder vom Dünengürtel bis zur Brandungslinie der normalen Flutwelle (Querbefestigung-Buhnen) verlaufen.

Diese besagten ortsfesten Befestigungswerke sind mit Durchlässen versehen um den Wasseraustausch und die Anlandung zu begünstigen, sie wirken auf den Wellengang durch Dissipation der Wellenenergie und durch Wellenbeugung wodurch die Küste vor Erosion geschützt wird und die Wiederherstellung von Sandablagerungen begünstigt wird.
Die ortsfesten Schutzbauten dieser Art sind wegen der Beschaffung, der Anlieferung und der Verlegung der natürlichen oder künstlichen Blöcke sehr spesenaufwändig.

Aus der EP 1536069 ist ein Verfahren zur Verfestigung von Böden durch Bodenbohrungen und Injektion von aufschäumenden Harzen in unterschiedlichen Tiefen bekannt. Dieses Verfahren welches für die Verfestigung von Böden mit Fundamenten von Bauten entwickelt worden ist, ermöglicht das Ausfüllen von Hohlräumen, wobei eventuelles Wasser verdrängt wird und das Material in den Bereichen der Injektion umschlossen und verbunden wird, wobei auch das Anheben des Bodenniveaus erreicht werden kann. Mit diesem Verfahren ist es nicht möglich eine kapillare und homogene Verfestigung, insbesondere von sandhaltigen, relativ kompakten Böden, wie sie üblicherweise in Küstengebieten anzutreffen sind, zu erreichen; in diesen Böden würden die aufschäumenden Harze nicht eindringen und sich nicht genügend ausbreiten.

Aus der DE 12004009509 A1 ist ein Verfahren für die Verfestigung sandiger Böden bekannt welches ein nicht wasserlösliches Polimerisat verwendet das bei Temperaturen von ≤ 30°, zusammen mit 0,5 - 10% Zement in Bezug auf den Sandanteil des Bodens, einen Film bildet. Dieses Verfahren ist nur zur Verfestigung einer relativ wenig tiefen Bodenschicht geeignet und wird z.B. für den Bau von Müllablagerungen, Deichen, Böschungen, Parkflächen verwendet.

Aus der DE 19510702 A1 ist ein Verfahren und eine Vorrichtung zur Herstellung von Böschungen und anderer Erdkörper mittels einer Mehrzahl neben- und übereinander verlegter Bewehrungselennente, vorzugsweise Altreifen, in die Schüttgut eingebracht wird und die mittels vertikal eingerammter Injektionslanzen verankert sind, bekannt. Über die besagten vertikalen Injektionslanzen wird eine "bekannte chemische Suspension" injiziert um die Scherfestigkeit des Schüttgutes zu erhöhen. Bei diesem Verfahren können nachträglich die "Bewehrungselemente" nicht abgebaut werden, ohne dass die Verfestigung des behandelten Bereiches verloren geht.

Aus der US 2002/0117302 A1 ist ein Verfestigungsverfahren für Sandformationen unter Einsatz von Nanopartikel einer Suspension von SiO₂ bekannt, wobei jedoch nicht die Verfestigung von Sandstränden, Dünen oder überfluteten, bzw. bewachsenen Sandbereichen vorgesehen ist.

Aus der JP 05070776 A ist ein Einspritzmörtel zum Verfestigen instabiler Formationen bekannt, wobei Suspensionen von SiO₂ Nanopartikel verwendet werden, eine Anweisung für die Verfestigung von Sandstränden, Dünen oder überfluteter, bzw. bewachsener, Sandbereiche erfolgt nicht.

Aus der US 1294875 ist ein Verfahren zur Verfestigung von Dünen bekannt welches das Einbringen von Silica Gel zusammen mit Pflanzensamen, zwecks schneller Begrünung von Dünen oder Sandbereichen, vorsieht. Dieses Verfahren bewirkt die Verfestigung einer relativ dünnen oberen Sandschicht welche erst nach einiger Zeit durch die Wurzeln der aus den Samen heranwachsenden Pflanzen gefestigt wird, ohne jedoch einer Unterspülung trotzen zu können.

Aus der US 6,372,614 B1 ist ein Verfahren zum Verfestigen von Dünen bekannt welches durch Aufsprühen von amorphem Silica vorsieht. Durch dieses Verfahren kann nur eine, relativ dünne, obere Schicht verfestigt werden welche nicht einem stärkeren Wellengang, bzw. einer Unterspülung, dauerhaft standhalten kann.

Die Erfindung stellt sich die Aufgabe ein Verfestigungsverfahren der vorher beschriebenen Art zu schaffen welches für die Verfestigung von Sandstränden, einschließlich eventueller Dünen, geeignet ist um der Erosion entgegenzuwirken, um die Anlandung zu begünstigen, um einstmalige Sandablagerungen wieder herzustellen, bzw. um die vorhandenen Sandstrände zu erweitern.

Zur Lösung dieser Aufgabe schlägt die Erfindung die Errichtung überfluteter oder aus dem Wasser ragender Barrieren vor welche durch die Einspritzung einer nanometrisch kolloidalen Silicasuspension (SiO₂) in Wasserlösung in Sandmassen erfolgt, wobei diese durch Schalungen verschiedener Art definiert sind welche die Ausmaße und den Verlauf der künstlichen Barrieren definieren. Die bekannte nanometrisch kolloidale Silicasuspension in Wasser für die Verfestigung oberflächlicher Schichten, z.B. von Naturgestein, von Putzschichten und von absorbierenden Bauobjekten, weist folgende Merkmale auf:
- ausgeprägte Eindringfähigkeit wegen der äußerst kleinen Teilchen,
- hohe Diffusion wegen der sehr niedrigen Viskosität,
- leicht basisch (ca. pH 9,8),
- reagiert chemisch nur mit Silizium während sie mit anderen Elementen nur eine physikalische Kohäsion eingeht.

Diese genannten Merkmale bewirken eine starke Verteilung des eingespritzten Materials innerhalb der relativ kompakten Sandmasse wodurch eine homogene Kohäsion in relativ ausgedehnten Bereichen der behandelten Masse erfolgt, welche in eher kurzer Zeit eine Sandstein-ähnliche Konsistenz mit einer Druckfestigkeit bis zu ca. 1,5 mPa, annimmt.

Im Fall der Erstellung überfluteter Barrieren, bzw. aus dem Wasser ragender Barrieren welche auf überflutetem Boden gründen, können die Schalungen auf bekannte Art, z.B. durch Spundbohlen oder durch, unter sich verbundene und überflutete, Elemente erstellt werden welche am, eventuell dafür vorbearbeiteten, Boden, aufliegen und die Wände für die dazwischen eingefüllten Sandmassen bilden. In die Sandmasse zwischen diesen nicht unbedingt dichten Schalungen werden, nach der Sedimentation des Sandes, mit bekannten Mitteln die Einspritzungen nanometrisch kolloidaler Silicasuspension in Wasser durchgeführt, dabei können auch Injektionsverfahren eingesetzt werden welche für die Erstellung von Anker aus Glasfaser-verstärktem Kunststoff bekannt sind. Das Niveau des, innerhalb der Schalung enthaltenen, Sandes muss höher sein als das gewünschte Niveau der Barriere weil eine bestimmte obere Sandschicht dazu dient, dass das eingespritzte Material nicht nach oben entweichen kann. Natürlich wird diese (nicht verfestigte) Dämmschicht später vom Wellengang und/oder vom Wind abgetragen. Infolge der Verteilung des Verfestigungsmittels innerhalb der in der Schalung enthaltenen Sandmasse und in der entsprechenden unter dieser befindlichen Sandmasse in welche ebenfalls Einspritzungen durchgeführt werden, und infolge der Verfestigungsreaktion, können die Spundbohlen, bzw. die Schalungselemente, abgebaut werden oder können die gefluteten Behälter welche als Schalung dienen in mindestens teilweise aufgetauchte Stellung gebracht werden.

Im Fall der Erstellung von Barrieren auf nicht überflutetem Boden, können metallische oder hölzerne Schalungen bekannter Art eingesetzt werden um die Sandmassen zu stauen welche, zusammen mit den darunter liegenden Sandmassen, nach den Einspritzungen, die Schutzbarriere bilden sollen.

Auf nicht überflutetem Boden, insbesondere an Dünen, schlägt die Erfindung eine vorausgehende Verfestigung der oberen natürlichen Sandschicht oder einer aufgebrachten und eigens, ohne den Einsatz von Schalungen, modellierten Sandschicht, mittels oberflächlicher Verteilung der selben nanometrisch kolloidalen Silicasuspension oder anderer bekannter Produkte vor, infolge welcher vertikale oder angewinkelte Einspritzungen in die Tiefenschichten erfolgen. Bei Anwendung dieses Verfahrens ist keine Schalung erforderlich weil die verfestigte obere Schicht das Entweichen des eingespritzten Materials verhindert. Das Verfestigen der oberen Schicht kann auch mittels unterschiedlicher, z.B. für die Erstellung von Mülldeponien, von Deichen, von Parkplätzen und dergleichen bekannter, Verfestigungsmittel und Verfahren erfolgen. Diese Variante ist auch im Falle der Präsenz von Vegetation welche die Erosion verhindert anwendbar, wobei die Verfestigung der oberen Schicht nur an den, nicht bewachsenen Bereichen, durchgeführt wird, während die vertikalen und/oder angewinkelten Einspritzungen auch an den bewachsenen Bereichen, in Tiefen welche nicht von Wurzeln durchdrungen sind, durchgeführt werden können.

Die Erfindung umfasst, an Stelle der nanometrisch kolloidalen Silicasuspension, auch den Einsatz einer nanometrisch Kalziumsuspension, in diesem Fall reagiert das Befestigungsmittel chemisch mit den Kalziumkarbonaten und ist somit für Strände mit Sand welcher Kalziumkarbonat enthält geeignet.

Erfindungsgemäß kann die nanometrisch kolloidale Silicasuspension, je nach der Körnung des Sandes am Ort der Errichtung der Barrieren, bzw. je nach der Körnung des in die Schalung gefüllten Materials, unterschiedliche Zusammensetzung haben, z.B. einen unterschiedlichen Anteil von Katalysatoren haben.

Die Erfindung wird anschließend, anhand einiger in den beigelegten Zeichnungen schematisch dargestellter vorzuziehender Ausführungsbeispiele des erfindungsgemäßen Verfahrens, näher erklärt, dabei erfüllen die Zeichnungen rein erklärenden, nicht begrenzenden Zweck.

Die Fig. 1 ist eine Schnittdarstellung gemäß der in Fig. 2 gezeigten Schnittebene I-I vertikal und quer durch den Verlauf des Strandes mit einer überfluteten Schutzbarriere.

Die Fig. 2 zeigt die Draufsicht auf einen Strandabschnitt samt Schalung für die Errichtung einer überfluteten Schutzbarriere welche der Schnittdarstellung in Fig. 1 entspricht.

Die Fig. 3 zeigt den selben in den Fig. 1 und 2 gezeigten Strand mit Anlandung im Bereich hinter der Schutzbarriere.

Die Fig. 4 zeigt ein Schema für die Errichtung einer Schutzbarriere auf überflutetem Boden mit Einsatz flutbarer Behälter welche die Schalung für die erfindungsgemäß zu verfestigende Sandmasse bilden, wobei auch der entsprechende darunter liegende Boden verfestigt wird.

Die Fig. 5 zeigt im Querschnitt eine auf nicht überflutetem Boden errichtete, erfindungsgemäß verfestigte Schutzbarriere.

Die Fig. 6 zeigt im Querschnitt eine durch das erfindungsgemäße Verfahren verfestigte Düne, wobei keine Schalung zum Einsatz kommt und die vertikalen und angewinkelten Einspritzungen, nach der Verfestigung der oberen Schicht der Düne, erfolgen.

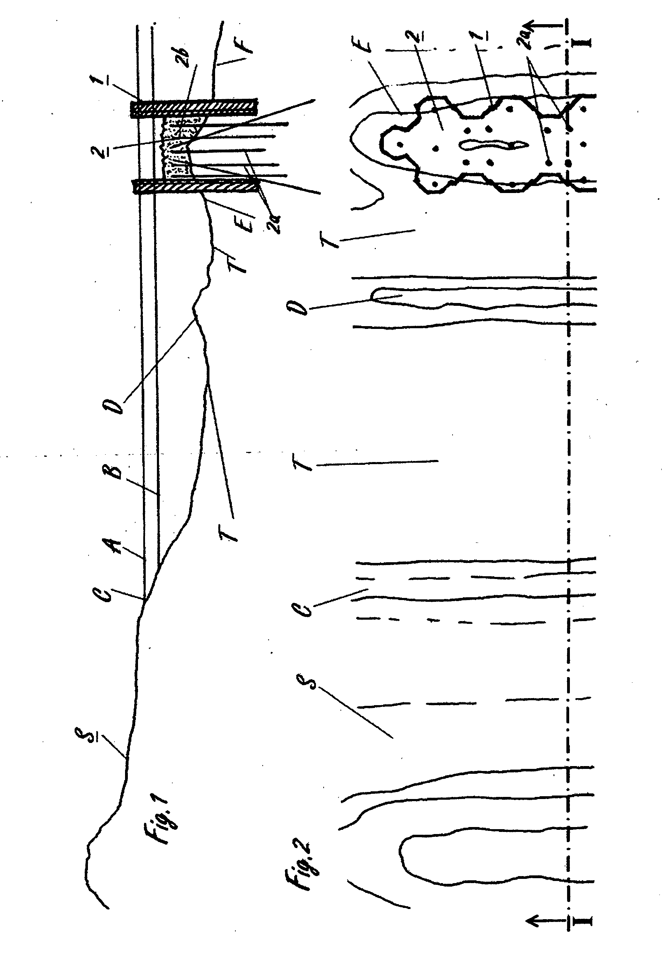

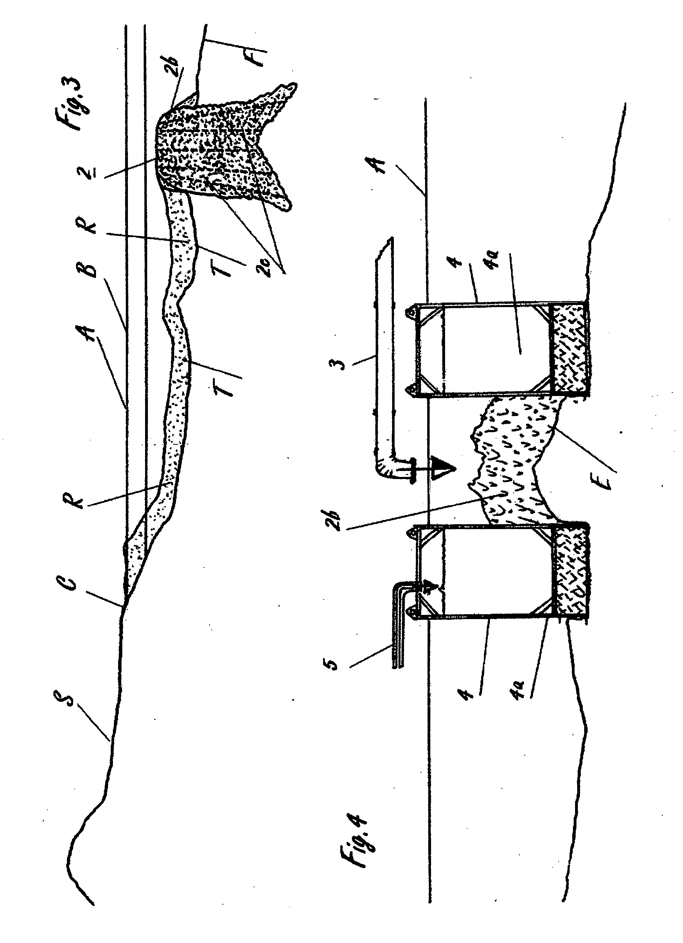

Der in den Fig. 1, 2, 3 gezeigte Strand besteht aus einer Hochschorre S, aus einer Wellenauflaufzone C welche wesentlich vom mittleren Tidenhochwasser A und vom mittleren Tidenniedrigwasser B definiert wird; der überflutete Bereich ist von einem Strandwall D und von einer Barre E mit Fuß F gekennzeichnet, hinter dem Strandwall erstreckt sich die Unterwasserschorre T. Im Bereich der Barre E ist eine Schalung 1, z.B. mittels in den Boden gerammten Spundbohlen, aufgebaut um den eingebrachten Sand 2b zu enthalten dessen oberstes Niveau überflutet werden kann oder aus dem Wasser ragen kann. Der eingefüllte Sand 2b kann vom Boden, z.B. mittels Schwimmbagger entnommen werden und mittels Rohr 3 befördert werden. Das Niveau des eingefüllten Sandes muss höher sein als das gewünschte Niveau der verfestigten Masse um eine obere Schicht zu bilden welche das Entweichen des eingespritzten Materials nach oben verhindert. In die eingefüllte Sandmasse 2b und in die darunter liegende Bodenmasse werden Einspritzungen 2a von nanometrisch kolloidaler Silicasuspension in Wasserlösung mittels bekannter Einspritzvorrichtungen durchgeführt welche wesentlich vertikale Richtung haben.

Infolge des Eindingens und der Verteilung des Verfestigungsmittels (SiO₂) und der darauffolgenden Kohäsionsphase welche die Verfestigung der bearbeiteten Masse bewirkt, kann die Schalung 1 abgenommen werden und die künstlich erstellte Barriere welche mit, unter sich beabstandeten, Lücken für den Durchfluss des Wassers ausgestattet ist, wird die progressive Anlandung R mit Verlagerung der Wellenauflaufzone C und Verbreiterung der Hochschorre S verursachen.

Eine besonders geeignete Schalung für die Erstellung künstlicher Barrieren mittels dem erfindungsgemäßen Verfahren auf überflutetem Boden besteht aus einer Reihe von dichten Behältern 4 welche über Rohre 5 mit Wasser 4a flutbar sind um sie am gegebenenfalls vorbereiteten Boden aufliegen zu lassen. Infolge der Befüllung der aus den Behältern 4 bestehenden Schalung mit, über Rohre 3 zugeführtem, Sand 2b und infolge Durchführung der Einspritzungen mit dem Verfestigungsmittel, kann das Wasser aus dem Inneren der Behälter 4 nach außen gepumpt werden, wodurch das mindestens teilweise Auftauchen der Behälter erreicht wird welche somit bequem an den Ort der Errichtung einer weiteren künstlichen Barriere gebracht werden können.

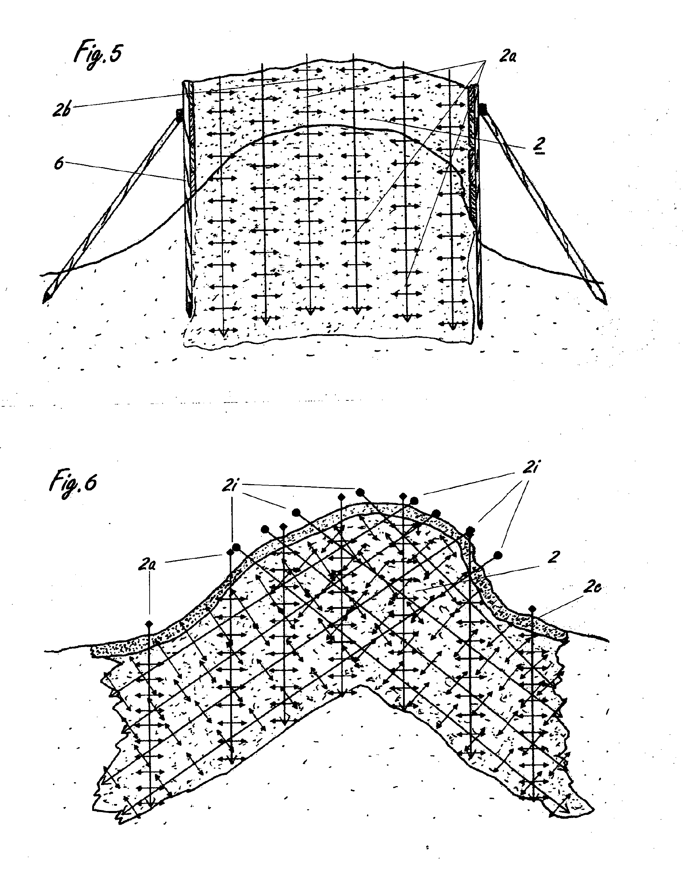

Im Falle der Errichtung von Barrieren 2 oder von Schutzbauten auf nicht überflutetem Boden (Fig. 5) kann der Sand 2b in Schalungen gefüllt werden welche aus dem Bausektor bekannt sind und welche wesentlich aus Paneelen 6 und einer entsprechenden, am Boden verankerte Stützstruktur bestehen.

Im Falle der Verfestigung von Dünen (Fig. 6) oder von nicht überfluteten Strandbereichen, schlägt die Erfindung eine vorherige Verfestigung der oberen Bodenschicht 2c auf bekannte Art, z.B. durch Ausbringung von nanometrisch kolloidaler Silicasuspension oder anderer, für die Oberlächenverfestigung bekannter Produkte, vor auf welche anschließend die Tiefenverfestigung durch Anwendung des erfindungsgemäßen Verfahrens mit vertikalen Einspritzungen und/oder mit angewinkelten Einspritzungen, je nach dem Profil der Düne, bzw. des Bodens, folgt. Zur Durchführung dieses Verfahrens wird keine Schalung benötigt weil die Oberflächenverfestigung 2c das Entweichen des nachfolgend eingespritzten Verfestigungsmittels an die Oberfläche verhindert.

## Patentansprüche

1. Verfahren zur Verfestigung von Sandstränden, von Dünen und nicht überfluteten Strandbereichen zwecks Verhinderung der Erosion, Begünstigung der Anlandung zur Wiederherstellung verlorener Sandbereiche, bzw. zur Vergrößerung der bestehenden nicht überfluteten Strandbereiche durch Erstellung künstlicher Barrieren, **dadurch gekennzeichnet, dass** die Ausmaße und der Verlauf der besagten Barrieren (2) durch, auf überflutetem oder nicht überflutetem Boden errichteten Schalungen (1, 4, 6) definiert sind welche auf ein Niveau mit Sand befüllt sind das über dem erforderlichen Niveau der Verfestigung der Sandmasse liegt, dass anschließend an der besagten Sandmasse (2b) Einspritzungen (2a) von nanometrisch kolloidaler Silicasuspension oder von nanometrisch Kalziumsuspension durchgeführt werden welche bis in den darunterliegenden Sandboden durchdringen und dass die Schalungen (1, 4, 6), nach erfolgter Kohäsion zwischen den bearbeiteten Sandkörnchen, abgebaut werden.

2. Verfestigungsverfahren gemäß Anspruch 1, **dadurch gekennzeichnet, dass** die Schalung welche die eingefüllte Sandmasse (2b) zur Erstellung künstlicher Barrieren auf überflutetem Boden fasst, aus dichten Behältern (4) besteht welche unter sich verbindbar sind, flutbar sind um am überfluteten, gegebenenfalls vorbereiteten, Boden aufliegen zu können, mindestens teilweise entleerbar sind um vom Boden, nach erfolgter Einspritzung und Verfestigung der Sandmasse, abzuheben so dass sie an den Ort der Errichtung einer weiteren Schutzbarriere gebracht werden können.

3. Verfestigungsverfahren gemäß Anspruch 1, **dadurch gekennzeichnet, dass** die obere Schicht der innerhalb der Schalungen (1, 4, 6) enthaltenen Sandmasse (2b), vor Durchführung der Einspritzungen (2a), mittels bekannter Verfestigungsmittel und -verfahren verfestigt wird.

4. Verfestigungsverfahren gemäß Anspruch 1, **dadurch gekennzeichnet, dass** zur Verfestigung von Dünen oder von nicht überfluteten Sandstränden zuerst die obere natürliche, nicht bearbeitete Schicht des Sandes oder die obere Schicht des gegebenenfalls, nach Bedarf aufgebrachten und geformten Sandes, mittels bekannter Verfahren und Mittel verfestigt wird um anschließend, nach Verfestigung dieser oberen Schicht (2c), vertikale Einspritzungen (2a) und/oder angewinkelte Einspritzungen (2i) von nanometrisch kolloidaler Silicasuspension oder von nanometrisch Kalziumsuspension, zwecks Erreichen der Tiefenverfestigung, durchzuführen.

## Claims

1. A method for solidifying sandy beaches, dunes and non-flooded beach areas for the purpose of preventing erosion, encouraging deposits in order to restore lost areas of sand and/or increasing the size of the existing, non-flooded beach areas by creating artificial barriers, **characterized in that** the dimensions and course of said barriers (2) are defined by formwork (1, 4, 6) that is erected on flooded or non-flooded ground, said formwork being filled with sand to a level that is above the required level of solidification of the sand mass, **in that** injections (2a) of nanometric colloidal silica suspension or of nanometric calcium suspension are then carried out on said sand mass (2b) and penetrate into the sandy soil therebelow, and **in that** the formwork (1, 4, 6) is dismantled after cohesion has taken place between the processed sand grains.

2. The solidification method according to claim 1, **characterized in that** the formwork that holds the introduced sand mass (2b) in order to create artificial barriers on flooded ground consists of sealed containers (4) which can be connected to one another, can be flooded so as to be able to rest on the flooded, optionally pre-prepared ground and can be at least partially emptied in order to raise them from the ground once injection has taken place and once the sand mass has solidified, so that they can be moved to the site of erection of a further protective barrier.

3. The solidification method according to claim 1, **characterized in that** the upper layer of the sand mass (2b) contained within the formwork (1, 4, 6) is solidified by known solidification agents and methods prior to the injections (2a) being carried out.

4. The solidification method according to claim 1, **characterized in that**, in order to solidify dunes or non-flooded sandy beaches, first the upper, natural, non-processed layer of the sand or the upper layer of the sand that is where necessary optionally applied and shaped is solidified by known methods and agents so as then, once this upper layer (2c) has been solidified, to carry out vertical injections (2a) and/or angled injections (2i) of nanometric colloidal silica suspension or of nanometric calcium suspension in order to achieve deep solidification.

## Revendications

1. Procédé de renforcement de côtes sableuses, de dunes et de plages non submergées destiné à empêcher l'érosion, à faciliter l'accostage et à restaurer les plages disparues ou à agrandir les plages existantes non submergées grâce à la réalisation de barrières artificielles, **caractérisé en ce que** les dimensions et le tracé desdites barrières (2) sont définis par des coffrages (1, 4, 6) mis en place sur les sols submergés ou non submergés, lesquels sont remplis de sable jusqu'à un niveau se trouvant au-dessus du niveau requis pour le renforcement de la masse sableuse, **en ce que** sont effectuées par la suite dans ladite masse sableuse des injections (2a) d'une suspension de silice colloïdale nanométrique ou de calcium nanométrique qui pénètre dans le sol sableux sous-jacent, et **en ce que** les coffrages (1, 4, 6), une fois la cohésion obtenue entre les grains de sable traités, sont démontés.

2. Procédé de renforcement selon la revendication 1, **caractérisé en ce que** le coffrage contenant la masse sableuse (2b) destinée à la réalisation de barrières artificielles sur sol submergé se compose de contenants (4) étanches pouvant être reliés entre eux et flotter de manière à pouvoir reposer sur le sol submergé et préparé le cas échéant, et pouvant être au moins en partie vidés en étant soulevé du sol, une fois l'injection effectuée et la masse sableuse renforcée, afin d'être amenés sur le lieu de réalisation d'une autre barrière de protection.

3. Procédé de renforcement selon la revendication 1, **caractérisé en ce que** la couche supérieure de la masse sableuse (2b) contenue à l'intérieur des coffrages (1, 4, 6) est, avant la réalisation des injections (2a), renforcée au moyen d'un procédé et d'un moyen de renforcement connus.

4. Procédé selon la revendication 1, **caractérisé en ce que**, pour le renforcement de dunes ou de plages non submergées, la couche de sable supérieure naturelle non traitée, ou la couche supérieure du sable appliqué et formé le cas échéant, est renforcée au moyen d'un procédé et d'un moyen connus pour ensuite, une fois cette couche supérieure (2c) renforcée, effectuer des injections à la verticale (2a) et/ou des injections en biais (2i) de suspension de silice colloïdale nanométrique ou de calcium nanométrique afin d'obtenir un renforcement en profondeur.
